# EUROPEAN PATENT SPECIFICATION

(11) **EP 3 130 050 B1**
(45) Date of publication and mention of the grant of the patent: **24.07.2019**
(21) Application number: 14722688.0
(22) Date of filing: 10.04.2014
(51) Int. Cl.: H02J 3/00, H02J 3/38, H02J 3/46, H02J 13/00

(54) **CONTROL UNIT FOR A POWER ENGINE UNIT**
STEUEREINHEIT FÜR EIN ANTRIEBSAGGREGAT
UNITÉ DE COMMANDE POUR UNITÉ DE MOTEUR DE PUISSANCE

(43) Date of publication of application: 15.02.2017
(73) Proprietor: Wärtsilä Finland Oy, 65100 Vaasa (FI)
(72) Inventor: KAAS, Tom, 65410 Solf (FI); SAIKKONEN, Ari, 65200 Vaasa (FI)
(74) Representative: Berggren Oy, Helsinki & Oulu
(86) International application number: PCT/FI2014/050262
(87) International publication number: WO 2015/155405

(56) References cited:
- EP-A1- 1 278 282
- EP-A1- 2 236 821
- WO-A1-2009/083639
- US-A1- 2008 071 427
- US-A1- 2013 054 038

## Description

### Field of technology

This invention relates to control systems for power engine units in a power plant.

### Prior art

A power plant can comprise several units in order to produce power to be delivered to the grid. The grid distributes the produced power to consumers of the grid. A single unit can be called power engine unit. It is a combination of an engine producing power and a generator transforming power to an electric form. The engine can, for example, be a diesel engine. The power engine units are connected to a bus bar of the power plant. The bus bar is, for example, a rail or cable. The bus bar is in connection with the circuit breaker that is called grid breaker through which the power is transmitted to the grid. If problems, like shortcuts, occur in the grid the power plant is automatically disconnected from the grid.

Large power plants can produce several hundred megawatts to the grid. Usually local power consumption of the plant is very small, for example about 300 kW, when compared to the produced power. So, practically all produced power is transmitted to the grid. In case of problems of the grid all power engine units are disconnected from the busbar of the power plant, because the local load is too small to consume the produced power and to provide enough load for any stable load sharing between the power engine units. One power engine unit can, for example, produce 20 MW.

As can be seen power to the local load of the power plant cannot be properly supplied.

### Short description

The aim of the invention is to provide a solution to provide power to the local load of the power plant during the period when the power plant is disconnected from grid. The aim is achieved by the invention as described in independent claims. Dependent claims describe different embodiments of the invention. An uninterrupted power can be supplied to the local load of the power plant according to the invention.

The invention provides a control unit for power engine unit of the power plant. The control unit comprises inputs to receive first status data from a grid breaker of the power plant, second status data from bus bar breakers, and third status data from a generator breaker, and a data bus interface to send and receive data between the control units connected to a data bus.

The control unit is arranged to send its identifier and the second and third status data to other control units connected to the data bus, and to receive identifiers and second and third status data from the other control units to determine a group of power engine units which are electrically connected with each other through a local bus bar.

In case of receiving the first status data indicating the grid breaker being open the control unit is arranged to decide whether to generate and send a control message to open the generator breaker based on predetermined criteria for said determined group of power engine units in such a way that one power engine unit remains to be connected to the local bus bar in the group.

WO 2009/083639 A1 discloses a control unit according to the preamble of claim 1.

### List of figures

In the following, the invention is described in more detail by reference to the enclosed drawings, where
- Figure 1: illustrates an example of a power plant comprising power engine specific control units according to the invention,
- Figure 2: shows the example of Figure 1 in case the grid breaker is open, and one power engine unit in each group being connected to a bus bar,
- Figure 3: shows the example of Figure 2 after a relay arrangement has disconnected the last connected power engine unit in the group having no local load,
- Figure 4: shows another example of a power plant comprising power engine specific control units according to the invention,
- Figure 5: shows the example of Figure 4 after the grid breaker has opened.
- Figure 6: shows an example of the control unit according to the invention, and
- Figure 7: shows a flow chart example of the method according to the invention.

### Detailed description

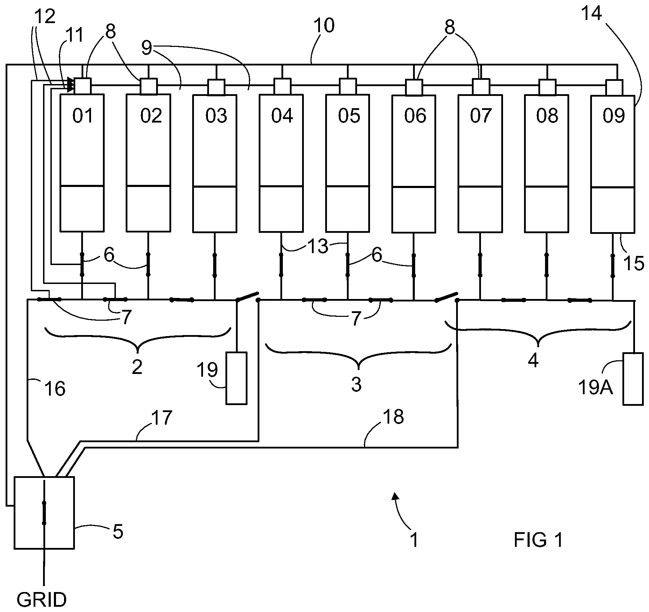

Figure 1 shows an example of a power plant 1 having nine power engine units 14, 15. As said above, the power engine unit comprises an engine 14 that produces power, and a generator 15 that transforms power into electric power. The engine is , for example, a piston engine or reciprocating engine. The power engine units 14, 15 are connected to the bus bar 2, 3, 4 of the power plant via connection branches 13 circuit breakers that are called generator breakers 6. As seen in Figure 1, the bus bar can contain several circuit breakers that are called bus bar breakers 7. The bus bar breakers make it possible to divide the bus into several parts depending on different needs. There are also a number of connections 16, 17, 18 between the bus bar 2, 3, 4 and the grid breaker 5. In this way different parts of the bus bar 2, 3, 4 and power engine unit 14, 15 can supply power to the grid through the grid breaker. A local load 19, 19A of the power plant is connected to the bus bar or its parts as well. Each power engine unit 14, 15 has a control unit 8 that is in connection with the grid breaker 5, the bus bar breakers 7, the generator breakers, through connection lines 10,11, 12. The control unit is also connected to a data bus 9. The connection lines 10, 11 and 12 are described only for one power engine unit, but it is clear that each unit has similar connections.

The grid breaker is open in Figure 1. However, power should still be supplied to the local load/loads 19, 19A. The bus bar breakers 7 divide the local bus bar into several parts, in the case of Figure 1 into three parts 2, 3, 4. The current division may not be known, because the division may vary due to different consumption situations of the grid, engine specific power productions, etc. So, a typical situation is that the division of the bus bar of the power plant is not known, and further it is not known into which part or parts the local load or loads are connected. The solution showed in Figure 1 solves problems created by these restrictions in order to supply power to the local load/loads from at least one power engine unit.

The division of the bus bar needs to be known in the solution in order to know the groups of power engine units 14, 15 that are electrically connected with each other. This can be achieved by the way of teaching of WO 2009083639. Since every power engine unit has a unique identifier, like 01 ... 09 in the example of Figure 1, the groups can be determined according the WO publication utilizing status data of the circuit breakers. In addition the use of status data from the generator breakers 6 are used in corresponding fashion as WO 2009083639 teaches. The power engine units 01, 02, and 03 form one group 2, units 04, 05, and 06 form another group 3, and units 07, 08, and 09 form the third group 4 in Figure 1. So, the control unit 8 according to the solution is arranged to determine a local group of power engine units 14, 15 which are electrically connected with each other through the local bus bar 2, 3, 4.

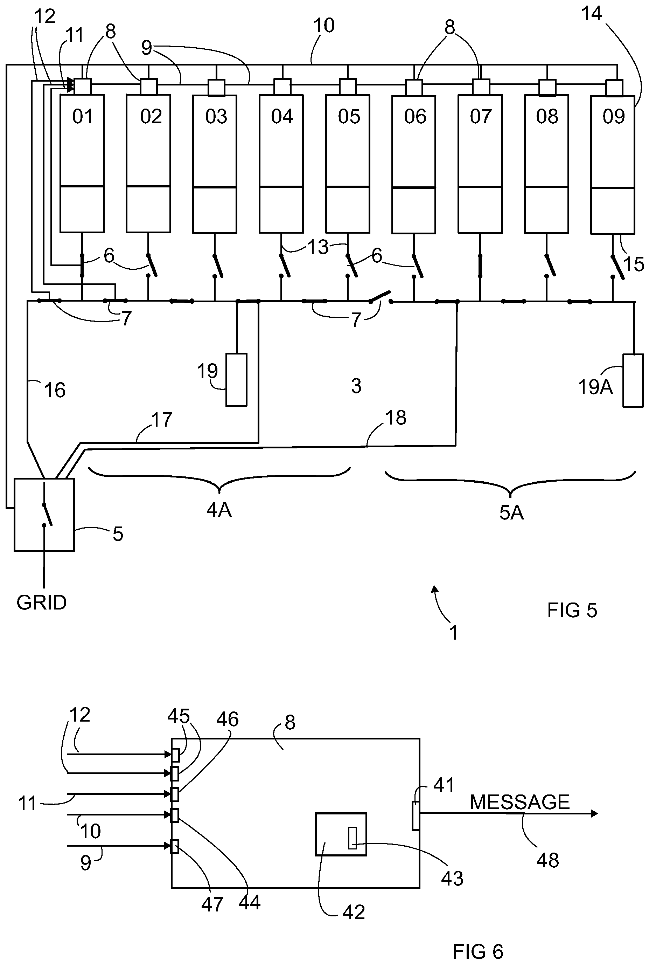

Figure 5 shows an example of the control unit. The control unit 8 comprises inputs 44, 45, 46 to receive first status data from a grid breaker 5 of the power plant, second status data from a bus bar breakers 7, and third status data from a generator breaker 6, and a data bus interface 47 to send and receive data between the control units 8 connected to a data bus 9.

The control unit 8 is arranged to send its identifier and the second and third status data to other control units 8 connected to the data bus 9, and to receive identifiers and second and third status data from the other control units to determine a group of power engine units 14, 15 which are electrically connected with each other through a local bus bar 2, 3, 4.

In case of receiving the first status data indicating the grid breaker 5 being open the control unit 8 is arranged to decide whether to generate and send a control message 48 to open the generator breaker 6 based on predetermined criteria for said determined group of power engine units in such a way that one power engine unit 14, 15 remains to be connected to the local bus-bar 2, 3, 4 within the group.

In other words, each control unit makes a local decision which power engine unit remains to be connected and which power engine units are disconnected from the local bus bar 2, 3, 4. In this way one power engine unit remains to supply power to the local load/loads 19, 19A within the group.

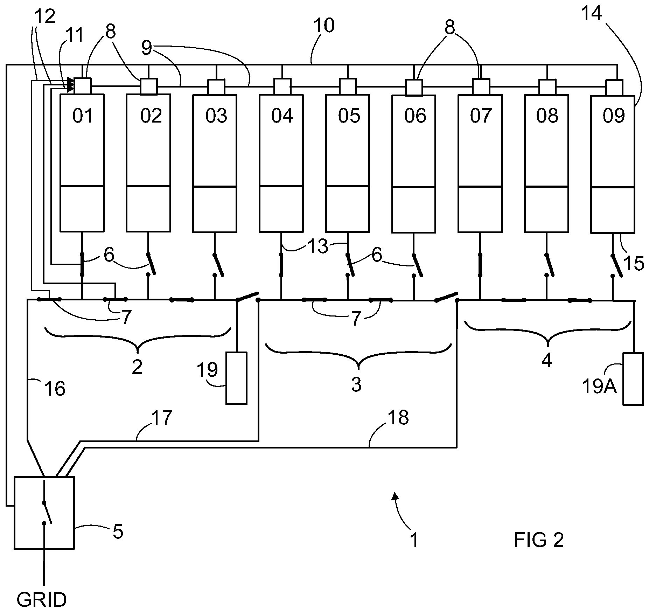

Figure 1 shows a situation before the grid breaker is opened due to a fault situation in the grid. Figure 2 shows a situation after the trip of the power plant 1 from the grid. As can be seen the power engine units having the lowers identifier 01, 04, 07 in the group remain to be in connection with the local bus bar 2, 3, 4. In this way the local load or loads can be connected to any part of the bus bar of the power plant.

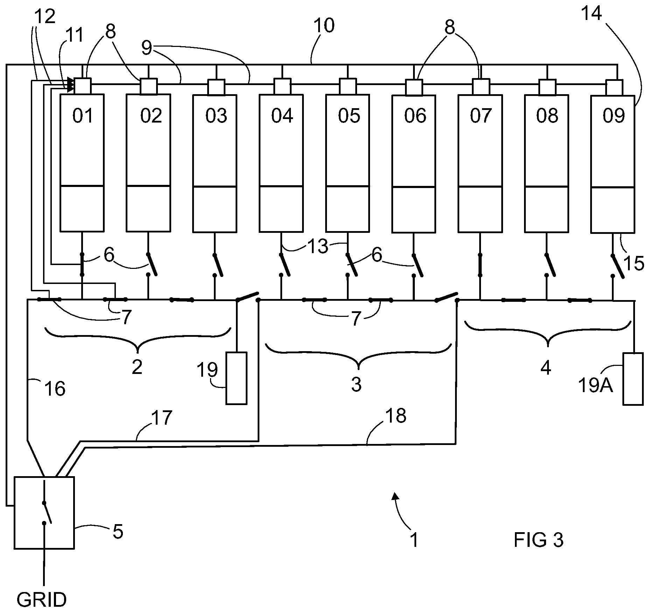

It can be seen from the figures that group of the power engine units with identifiers 04, 05 and 06 has no local load. However one power engine unit with identifier 04 is still supplying power to the local part of the bus bar 3. This situation is taken care of a normal relay arrangement which disconnects the power engine unit with the identifier 04 very soon after the grid breaker 5 has been opened as can be seen in Figure 3. The remaining connected power engine units having identifiers 01 and 07 continues to be driven towards consumptions of the loads 19, 19A. So according to the invention, at least one power engine unit remains to supply power for the local load of the power plant in a stable manner.

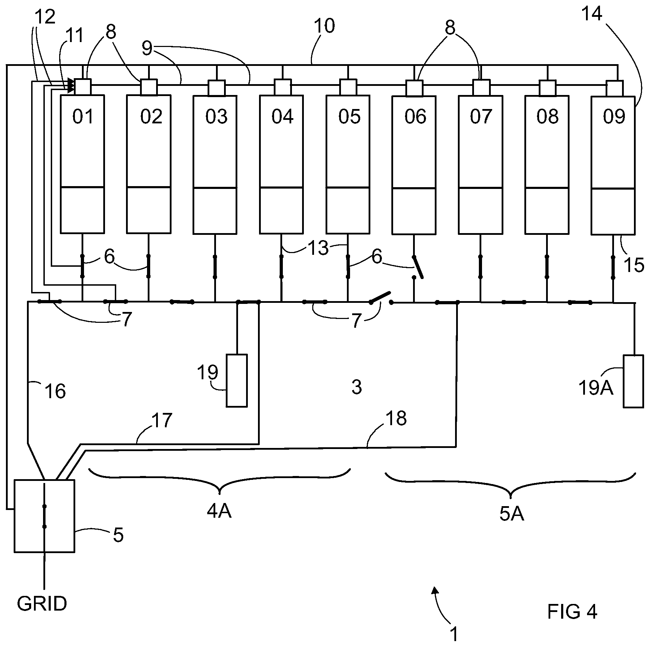

Figures 4 and 5 show another example how the bus bar of the power plant can be divided. In this case there are two groups 4A, 5A of the power engine units being electrically connected with each other. Figure 4 shows the situation when the grid breaker 5 is not open, and Figure 5 after the grid breaker has opened. As can be seen from this example, the power engine units having the lowest identifier 01, and 07 remain being in connection to the bus bar in the group. In can also be noted that the power engine unit 06 is not taken into account because it is initially not connected to the group 5A due to, for example, maintenance work.

The above said predetermined criteria can, for example, utilize the identifier value of the power engine units. The identifier value can be number value or a letter based code, which can have different values. So the criteria, for example, can keep the power engine unit 14, 15 having the lowest or the highest identifier value in connection with the local bus bar 2, 3, 4.

In case of local consumption of the local bus bar is known the predetermined criteria can be to keep the power engine unit 14, 15 producing the nearest power with respect to local consumption in connection with the local bus bar 2, 3, 4. Other alternatives for the predetermined criteria can be to keep the power engine unit 14, 15 having the lowest emission level or the lowest running hours for service time in connection with the local bus bar 2, 3, 4.

The control unit as shown in Figure 6 further comprises a control interface 41 in order to send the control message 48 and a decision unit 42 in order to decide whether to generate and send the control message. The decision unit has a memory 43 containing the predetermined criteria.

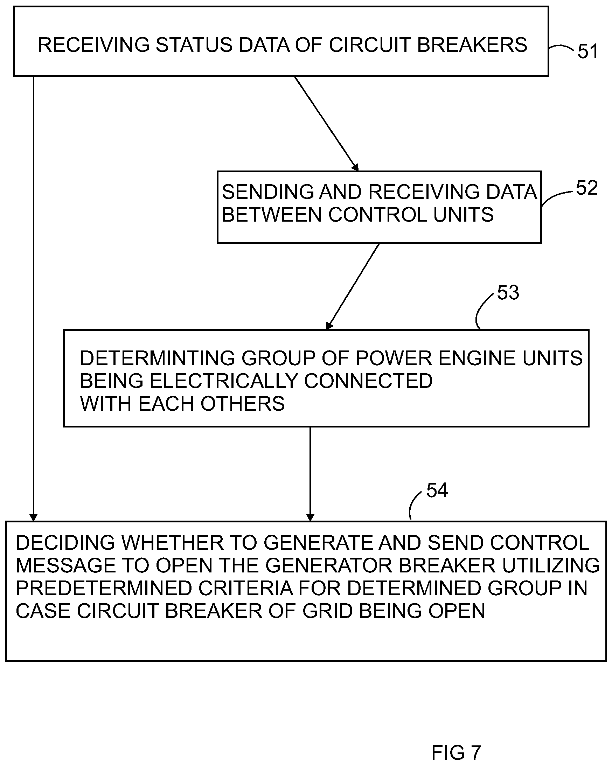

Figure 7 shows a flow chart example of the method for power engine unit 14, 15 of the power plant 1, comprising steps of receiving 51 first status data from a grid breaker 5 of the power plant, second status data from a bus bar breakers 7, and third status data from a generator breaker 6; and sending and receiving data 52 between the control units 8 connected to a data bus 9 in order to send an identifier and the second and third status data to other control units 8 connected to the data bus 9, and to receive identifiers and second and third status data from the other control units.

The method further comprises a step of determining 53 a group of power engine units 14, 15 which are electrically connected with each other through a local bus bar 2, 3, 4 utilizing the received second and third status data. In addition, the method comprises a step of deciding 54 whether to generate and send a control message to open the generator breaker 6 based on predetermined criteria for said determined group of power engine units 14, 15 in such a way that one power engine unit remains to be connected to the local bus bar 2, 3, 4 in the group in case of receiving the first status data indicating the grid breaker being open. As can be seen from Figure 7 the decision step 54 utilizes the status data of the grid breaker and the results of the group determining step.

Similarly with the above said matters of the predetermined criteria, the criteria of the method can keep the power engine unit 14, 15 having the lowest or the highest identifier value in connection with the local bus bar 2, 3, 4. Other alternatives for the criteria is to keep the power engine unit 14, 15 having the lowest emission level or the lowest running hours for service in connection with the local bus bar 2, 3, 4. In case of local consumption of the local bus bar 2, 3,4 is known the predetermined criteria of the method can be made for keeping the power engine unit 14, 15 producing the nearest power with respect to local consumption in connection with the local bus bar 2, 3, 4.

The amount of the local load is at least roughly known to be too small for a stable load sharing in cases of problems in the grid. This knowledge is utilized when providing the control unit according to the invention. Exact location or locations of the local load is actually not needed as illustrated in the example of Figure 3. Utilizing current knowledge of the groups of the power engine units, at least one power engine unit can supply power to the local load. The invention is not restricted into the examples of this description but can be obtained in other ways within the scope of the independent claims.

## Claims

1. A control unit (8) for a power engine unit (14, 15) of a power plant (1), comprising inputs (44, 45, 46) to receive first status data from a grid breaker (5) of the power plant, second status data from bus bar breakers (7), and third status data from a generator breaker (6), a data bus interface (47) to send and receive data between the control unit (8) and other control units (8) connected to a data bus (9), the control unit (8) being arranged to send its identifier and the second and third status data to the other control units (8) connected to the data bus (9), and to receive identifiers and second and third status data from the other control units to determine a group of power engine units (14, 15) which are electrically connected with each other through a local bus bar (2, 3, 4), wherein in case of receiving the first status data indicating the grid breaker (5) being open the control unit (8) is arranged to utilize said identifiers and the second and third status data to determine at least one group of power engine units (14, 15) which are electrically connected with each other through a local bus bar (2, 3, 4), and is arranged to decide whether to generate and send a control message (48) to open the generator breaker (6) based on predetermined criteria for said each determined group of power engine units in such a way that one power engine unit (14, 15) remains to be connected to the local bus bar (2, 3, 4) in each determined group.

2. A control unit according to claim 1, **characterized in that** the predetermined criteria is to keep the power engine unit (14, 15) having the lowest or the highest identifier value in connection with the local bus bar (2, 3, 4).

3. A control unit according to claim 1, **characterized in that** in case of local consumption of the local bus bar is known the predetermined criteria is to keep the power engine unit (14, 15) producing the nearest power with respect to local consumption in connection with the local bus bar (2, 3, 4).

4. A control unit according to claim 1, **characterized in that** the predetermined criteria is to keep the power engine unit (14, 15) having the lowest emission level in connection with the local bus bar (2, 3, 4).

5. A control unit according to claim 1, **characterized in that** the predetermined criteria is to keep the power engine unit (14, 15) having the lowest running hours for service time in connection with the local bus bar (2, 3, 4).

6. A control unit according to claim 1, **characterized in that** it comprises a control interface (41) in order to send the control message, and a decision unit (42) in order to decide whether to generate and send the control message, the decision unit having a memory (43) containing the predetermined criteria.

7. A control method for a power engine unit (14, 15) of a power plant (1), comprising the steps of receiving (51) first status data from a grid breaker (5) of the power plant, second status data from a bus bar breakers (7), and third status data from a generator breaker (6),
sending and receiving data (52) between the control unit (8) and other control units (8) connected to a data bus (9) in order to send an identifier and the second and third status data to the other control units (8) connected to the data bus (9), and to receive identifiers and second and third status data from the other control units,
determining (53) at least one group of power engine units (14, 15) which are electrically connected with each other through a local bus bar (2, 3, 4) utilizing the received second and third status data, wherein the method further comprises a a step of utilizing, in case of receiving the first status data indicating the grid breaker (5) being open, said identifiers and the second and third status data to determine at least one group of power engine units (14, 15) which are electrically connected with each other through a local bus bar (2,3,4)
and a step of deciding (54) whether to generate and send a control message to open the generator breaker (6) based on predetermined criteria for each said determined group of power engine units (14, 15) in such a way that one power engine unit remains to be connected to the local bus bar (2, 3, 4) in each determined group in case of receiving the first status data indicating the grid breaker being open.

8. A control method according to claim 7, **characterized in that** the predetermined criteria is to keep the power engine unit (14, 15) having the lowest or the highest identifier value in connection with the local bus bar (2, 3, 4).

9. A control method according to claim 7, **characterized in that** in case of local consumption of the local bus bar (2, 3, 4) is known the predetermined criteria is to keep the power engine unit (14, 15) producing the nearest power with respect to local consumption in connection with the local bus bar (2, 3, 4.)

10. A control method according to claim 7, **characterized in that** the predetermined criteria is to keep the power engine unit (14, 15) having the lowest emission level in connection with the local bus bar (2, 3, 4).

11. A control method according to claim 7, **characterized in that** the predetermined criteria is to keep the power engine unit (14, 15) having the lowest running hours for service time in connection with the local bus bar (2, 3, 4).

## Patentansprüche

1. Steuereinheit (8) für ein Antriebsaggregat (14, 15) eines Kraftwerks (1)
mit Eingängen (44, 45, 46) zum Empfangen von ersten Zustandsdaten von einem Netzleistungsschalter (5) des Kraftwerks, zweiten Zustandsdaten von Sammelschienenleistungsschaltern (7) und dritten Zustandsdaten von einem Generatorleistungsschalter (6), einer Datenbusschnittstelle (47) zum Senden und Empfangen von Daten zwischen der Steuereinheit (8) und anderen mit einem Datenbus (9) verbundenen Steuereinheiten (8),
wobei die Steuereinheit (8) so eingerichtet ist, dass sie ihre Kennung und die zweiten und die dritten Zustandsdaten zu den anderen mit dem Datenbus (9) verbundenen Steuereinheiten (8) sendet und zum Bestimmen einer Gruppe von Antriebsaggregaten (14, 15), die über eine lokale Sammelschiene (2, 3, 4) elektrisch miteinander verbunden sind, Kennungen und zweite und dritte Zustandsdaten von den anderen Steuereinheiten empfängt,
wobei die Steuereinheit (8) so eingerichtet ist, dass sie, falls die ersten Zustandsdaten empfangen werden, die angeben, dass der Netzleistungsschalter (5) geöffnet ist, die Kennungen und die zweiten und die dritten Zustandsdaten zum Bestimmen mindestens einer Gruppe von Antriebsaggregaten (14, 15) benutzt, die über eine lokale Sammelschiene (2, 3, 4) elektrisch miteinander verbunden sind, und
so eingerichtet ist, dass sie auf der Grundlage von vorgegebenen Kriterien für jede bestimmte Gruppe von Antriebsaggregaten auf eine solche Weise entscheidet, ob eine Steuernachricht (48) erzeugt und gesendet wird, dass der Generatorleistungsschalter (6) geöffnet werden soll, dass in jeder bestimmten Gruppe ein Antriebsaggregat (14, 15) übrigbleibt, das mit der lokalen Sammelschiene (2, 3, 4) verbunden bleibt.

2. Steuereinheit nach Anspruch 1, **dadurch gekennzeichnet, dass** die vorgegebenen Kriterien darin bestehen, die Verbindung des Antriebsaggregats (14, 15) mit dem geringsten oder dem höchsten Kennungswert mit der lokalen Sammelschiene (2, 3, 4) aufrechtzuerhalten.

3. Steuereinheit nach Anspruch 1, **dadurch gekennzeichnet, dass**, wenn ein lokaler Verbrauch der lokalen Sammelschiene bekannt ist, die vorgegebenen Kriterien darin bestehen, die Verbindung des Antriebsaggregats (14, 15), das die dem lokalen Verbrauch am ehesten entsprechende Leistung erzeugt, mit der lokalen Sammelschiene (2, 3, 4) aufrechtzuerhalten.

4. Steuereinheit nach Anspruch 1, **dadurch gekennzeichnet, dass** die vorgegebenen Kriterien darin bestehen, die Verbindung des Antriebsaggregats (14, 15) mit dem geringsten Emissionspegel mit der lokalen Sammelschiene (2, 3, 4) aufrechtzuerhalten.

5. Steuereinheit nach Anspruch 1, **dadurch gekennzeichnet, dass** die vorgegebenen Kriterien darin bestehen, die Verbindung des Antriebsaggregats (14, 15) mit der geringsten Laufzeit pro Betriebsdauer mit der lokalen Sammelschiene (2, 3, 4) aufrechtzuerhalten.

6. Steuereinheit nach Anspruch 1, **dadurch gekennzeichnet, dass** sie eine Steuerschnittstelle (41) zum Senden der Steuernachricht und eine Entscheidungseinheit (42) zum Entscheiden umfasst, ob die Steuernachricht erzeugt und gesendet werden soll, wobei die Entscheidungseinheit einen Speicher (43) aufweist, der die vorgegebenen Kriterien enthält.

7. Steuerverfahren für ein Antriebsaggregat (14, 15) eines Kraftwerks (1), das folgende Schritte umfasst:
Empfangen (51) von ersten Zustandsdaten von einem Netzleistungsschalter (5) des Kraftwerks, zweiten Zustandsdaten von Sammelschienenleistungsschaltern (7) und dritten Zustandsdaten von einem Generatorleistungsschalter (6),
Senden und Empfangen von Daten (52) zwischen der Steuereinheit (8) und anderen mit einem Datenbus (9) verbundenen Steuereinheiten (8) zum Senden einer Kennung und der zweiten und der dritten Zustandsdaten zu den anderen mit dem Datenbus (9) verbundenen Steuereinheiten (8) und zum Empfangen von Kennungen und zweiten und dritten Zustandsdaten von den anderen Steuereinheiten,
Bestimmen (53) mindestens einer Gruppe von Antriebsaggregaten (14, 15), die über eine lokale Sammelschiene (2, 3, 4) elektrisch miteinander verbunden sind, unter Verwendung der empfangenen zweiten und dritten Zustandsdaten,
wobei das Verfahren ferner das Benutzen der Kennungen und der zweiten und der dritten Zustandsdaten zum Bestimmen mindestens einer Gruppe von Antriebsaggregaten (14, 15) umfasst, die über eine lokale Sammelschiene (2, 3, 4) elektrisch miteinander verbunden sind, falls die ersten Zustandsdaten empfangen werden, die angeben, dass der Netzleistungsschalter (5) geöffnet ist,
und Entscheiden (54) auf der Grundlage von vorgegebenen Kriterien für jede bestimmte Gruppe von Antriebsaggregaten (14, 15), ob eine Steuernachricht erzeugt und gesendet wird, dass der Generatorleistungsschalter (6) geöffnet werden soll, auf eine solche Weise, dass in jeder bestimmten Gruppe ein Antriebsaggregat übrigbleibt, das mit der lokalen Sammelschiene (2, 3, 4) verbunden bleibt, falls die ersten Zustandsdaten empfangen werden, die angeben, dass der Netzleistungsschalter geöffnet ist.

8. Steuerverfahren nach Anspruch 7, **dadurch gekennzeichnet, dass** die vorgegebenen Kriterien darin bestehen, die Verbindung des Antriebsaggregats (14, 15) mit dem geringsten oder dem höchsten Kennungswert mit der lokalen Sammelschiene (2, 3, 4) aufrechtzuerhalten.

9. Steuerverfahren nach Anspruch 7, **dadurch gekennzeichnet, dass**, wenn ein lokaler Verbrauch der lokalen Sammelschiene (2, 3, 4) bekannt ist, die vorgegebenen Kriterien darin bestehen, die Verbindung des Antriebsaggregats (14, 15), das die dem lokalen Verbrauch am ehesten entsprechende Leistung erzeugt, mit der lokalen Sammelschiene (2, 3, 4) aufrechtzuerhalten.

10. Steuerverfahren nach Anspruch 7, **dadurch gekennzeichnet, dass** die vorgegebenen Kriterien darin bestehen, die Verbindung des Antriebsaggregats (14, 15) mit dem geringsten Emissionspegel mit der lokalen Sammelschiene (2, 3, 4) aufrechtzuerhalten.

11. Steuerverfahren nach Anspruch 7, **dadurch gekennzeichnet, dass** die vorgegebenen Kriterien darin bestehen, die Verbindung des Antriebsaggregats (14, 15) mit der geringsten Laufzeit pro Betriebsdauer mit der lokalen Sammelschiene (2, 3, 4) aufrechtzuerhalten.

## Revendications

1. Unité de commande (8) pour une unité de moteur électrique (14, 15) d'une centrale électrique (1) comprenant des entrées (44, 45, 46) pour recevoir des premières données d'état venant d'un disjoncteur de réseau (5) de la centrale électrique, des deuxièmes données d'état venant de disjoncteurs de barre de bus (7) et des troisièmes données d'état venant d'un disjoncteur de générateur (6), une interface de bus de données (47) pour envoyer et recevoir des données entre l'unité de commande (8) et d'autres unités de commande (8) connectées à un bus de données (9), l'unité de commande (8) étant agencée pour envoyer son identifiant et les deuxièmes et troisièmes données d'état aux autres unités de commande (8) connectées au bus de données (9) et pour recevoir des identifiants et des deuxièmes et troisièmes données d'état des autres unités de commande pour déterminer un groupe d'unités de moteur électrique (14, 15) qui sont connectées électriquement l'une à l'autre par le biais d'une barre de bus locale (2, 3, 4),
dans lequel
en cas de réception des premières données d'état indiquant que le disjoncteur de réseau (5) est ouvert, l'unité de commande (8) est agencée pour utiliser lesdits identifiants et les deuxièmes et troisièmes données d'état pour déterminer au moins un groupe d'unités de moteur électrique (14, 15) qui sont connectées électriquement l'une à l'autre par le biais d'une barre de bus locale (2, 3, 4), et est agencée pour décider de générer et d'envoyer ou non un message de commande (48) d'ouvrir le disjoncteur de générateur (6) en se basant sur des critères prédéterminés pour chacun desdits groupes déterminés d'unités de moteur électrique de telle façon qu'une unité de moteur électrique (14, 15) reste pour être connectée à la barre de bus locale (2, 3, 4) dans chaque groupe déterminé.

2. Unité de commande selon la revendication 1, **caractérisée en ce que** le critère prédéterminé est de maintenir l'unité de moteur électrique (14, 15) ayant la valeur d'identifiant la plus basse ou la plus élevée en connexion avec la barre de bus locale (2, 3, 4) .

3. Unité de commande selon la revendication 1, **caractérisée en ce qu'**au cas où la consommation locale de la barre de bus locale est connue, le critère prédéterminé est de maintenir l'unité de moteur électrique (14, 15) en production de l'électricité la plus proche par rapport à la consommation locale en connexion avec la barre de bus locale (2, 3, 4).

4. Unité de commande selon la revendication 1, **caractérisée en ce que** le critère prédéterminé est de maintenir l'unité de moteur électrique (14, 15) ayant le niveau d'émission le plus bas en connexion avec la barre de bus locale (2, 3, 4).

5. Unité de commande selon la revendication 1, **caractérisée en ce que** le critère prédéterminé est de maintenir l'unité de moteur électrique (14, 15) ayant les heures de fonctionnement les plus basses pour la durée de service en connexion avec la barre de bus locale (2, 3, 4).

6. Unité de commande selon la revendication 1, **caractérisée en ce qu'**elle comprend une interface de commande (41) afin d'envoyer le message de commande et une unité de décision (42) afin de décider de générer et d'envoyer ou non le message de commande, l'unité de décision ayant une mémoire (43) contenant le critère prédéterminé.

7. Procédé de commande pour une unité de moteur électrique (14, 15) d'une centrale électrique (1) comprenant les étapes de recevoir (51) des premières données d'état venant d'un disjoncteur de réseau (5) de la centrale électrique, des deuxièmes données d'état venant de disjoncteurs de barre de bus (7) et des troisièmes données d'état venant d'un disjoncteur de générateur (6), d'envoyer et de recevoir des données (52) entre l'unité de commande (8) et d'autres unités de commande (8) connectées à un bus de données (9) afin d'envoyer un identifiant et des deuxièmes et troisièmes données d'état aux autres unités de commande (8) connectées au bus de données (9) et de recevoir les identifiants et des deuxièmes et troisièmes données d'état venant des autres unités de commande,
de déterminer (53) au moins un groupe d'unités de moteur électrique (14, 15) qui sont connectées électriquement l'une à l'autre par une barre de bus locale (2, 3, 4) utilisant les deuxièmes et troisièmes données d'état,
dans lequel le procédé comprend en outre une étape d'utilisation, en cas de réception des premières données d'état indiquant que le disjoncteur de réseau (5) est ouvert, desdits identifiants et les deuxièmes et troisièmes données d'état pour déterminer au moins un groupe d'unités de moteur électrique (14, 15) qui sont connectées électriquement l'une à l'autre par le biais d'une barre de bus locale (2, 3, 4), et une étape de décider (54) de générer et d'envoyer ou non un message de commande d'ouvrir le disjoncteur de générateur (6) en se basant sur des critères prédéterminés pour chacun desdits groupes déterminés d'unités de moteur électrique (14, 15) de telle façon qu'une unité de moteur électrique reste pour être connectée à la barre de bus locale (2, 3, 4) dans chaque groupe déterminé en cas de réception des premières données d'état indiquant que le disjoncteur de réseau est ouvert.

8. Procédé de commande selon la revendication 7, **caractérisé en ce que** le critère prédéterminé est de maintenir l'unité de moteur électrique (14, 15) ayant la valeur d'identifiant la plus basse ou la plus élevée en connexion avec la barre de bus locale (2, 3, 4) .

9. Procédé de commande selon la revendication 7, **caractérisé en ce qu'**au cas où la consommation locale de la barre de bus locale (2, 3, 4) est connue, le critère prédéterminé est de maintenir l'unité de moteur électrique (14, 15) en production de l'électricité la plus proche par rapport à la consommation locale en connexion avec la barre de bus locale (2, 3, 4).

10. Procédé de commande selon la revendication 7, **caractérisé en ce que** le critère prédéterminé est de maintenir l'unité de moteur électrique (14, 15) ayant le niveau d'émission le plus bas en connexion avec la barre de bus locale (2, 3, 4).

11. Procédé de commande selon la revendication 7, **caractérisé en ce que** le critère prédéterminé est de maintenir l'unité de moteur électrique (14, 15) ayant les heures de fonctionnement les plus basses pour la durée de service en connexion avec la barre de bus locale (2, 3, 4).
